# EUROPÄISCHE PATENTANMELDUNG

(11) **EP 1 674 768 A2**
(43) Veröffentlichungstag der Anmeldung: **28.06.2006**
(21) Anmeldenummer: 05025385.5
(22) Anmeldetag: 22.11.2005
(51) Int. Cl.: F16H 61/662

(54) **Stufenlos verstellbares Kegelscheibengetriebe**

(30) Priorität: 23.12.2004 DE 102004063483
(71) Anmelder: PIV Drives GmbH, 61352 Bad Homburg (DE)
(72) Erfinder: Schönnenbeck, Gert, Dr.-Ing., 61267 Neu-Ansprach (DE); Staude, Martin, Dipl.-Ing., 64354 Reinheim (DE)
(74) Vertreter: Petersen, Frank

(57) **Zusammenfassung**

Kegelscheibengetriebe mit stufenlos verstellbarer Übersetzung, das über auf den Getriebewellen angeordnete hydraulische Spannmittel verfügt, die über ein Steuerventil mit Hydraulikflüssigkeit beaufschlagt werden. Im Rücklauf des Steuerventil befindet sich wenigstens ein Drehmomentfühler auf der Antriebswelle des Getriebes. Der Drehmomentfühler pumpt bei einem plötzlichen Drehmomentanstieg ein bestimmtes Volumen der Hydraulikflüssigkeit über ein Rückschlagventil, das in der Antriebswelle integriert ist unter Umgehung des Steuerventils direkt in das Druckmittelsystem und das hydraulische Spannmittel. Bei einem weiteren Drehmomentfühler auf der Abtriebswelle kann auch der Fühler über ein zusätzliches Rückschlagventil, das in der Antriebswelle integriert ist, Druckmittel in das hydraulische Spannmittel drücken.

## Beschreibung

Die Erfindung betrifft ein stufenlos einstellbares Kegelscheibengetriebe mit auf An- und Abtriebswelle drehfest angeordneten Paaren von Kegelscheiben, von denen je eine fest mit der Welle verbunden, sowie je eine axial verschiebbar ist, und zwischen denen ein Zugmittelstrang zur Leistungsübertragung umläuft, wobei die axial verschiebbaren Kegelscheiben mit hydraulischen, axial wirkenden Spannmitteln versehen sind, denen zur Einstellung und Aufrecherhaltung der Getriebeübersetzung von einer Pumpe Druckmittel über ein Steuerventil zugeteilt wird, wobei im Druckmittelfluss dem Spannmittel auf der Antriebswelle ein Drehmomentfühler nachgeschaltet ist, der im Momentenfluss angeordnet ist und durch eine drehmomentabhängige Relativbewegung zweier Ventilteile lastabhängig den Druckmittelfluss drosselt und zusätzlich ein bestimmtes Volumen des Druckmittels über wenigstens ein Rückschlagventil unter Umgehung des Steuerventils in die hydraulischen Spannmittel pumpt.

Ein Kegelscheibengetriebe dieser Art ist beispielsweise bekannt aus der DE-A-38 17-532.

Bei wie hier beschriebenen stufenlos einstellbaren Kegelscheibengetrieben ist es wichtig, dass auch bei schlagartigen Laständerungen auch ein kurzzeitiges Durchrutschen des Spannmittels verhindert wird. Um dies zu ermöglichen, reagiert der angesprochene Drehmomentfühler in der Antriebswelle auf einen normalen Drehmomentanstieg, indem er den Basisdruck in den Spannmitteln durch Drosseln des Abflussstromes so weit erhöht, bis dieser dem die Kraftübertragung sicherstellenden Sollwert entspricht.

Bei einem schlagartigen Lastanstieg dagegen schließt der Drehmomentfühler den Abfluss des Druckmittels völlig und pumpt seinerseits noch ein bestimmtes Druckmittelvolumen in das Anpresssystem zurück. Um bei derartigen ruckartigen Laständerungen die Ansprechzeit der hydraulischen Spannmittel gering zu halten, wurde vorgeschlagen, zwischen dem Drehmomentfühler und den zu den hydraulischen Spannmitteln führenden Druckmittelleitungen weitere Druckmittelleitungen mit in Pumprichtung öffnenden Sperrventilen anzuordnen, um bei einer Betätigung des Drehmomentfühlers unter Umgehung des Steuerventils entsprechendes Druckmittel unmittelbar in die hydraulischen Spannmittel zu fördern.

Nachteilig bei dem derartigen Stand der Technik ist aber, dass der Volumenstrom, der vom Drehmomentfühler in das System gepumpt wird, durch ein größeres Rohrleistungssystem und zusätzliche Rohrleitungen zu den Spannmitteln geführt wird. Da außerdem die Strömungsgeschwindigkeiten in solchen Situationen sehr groß sind, entstehen hohe Druckverluste, die den gewünschten Effekt stark abmindern.

Aufgabe der vorliegenden Erfindung ist es daher, eine Vorrichtung wie oben beschrieben derart weiterzuentwickeln, dass ein entsprechender Druckverlust nicht mehr auftritt, um eine schnellere Reaktion auf Drehmomentstöße realisieren zu können.

Außerdem soll eine Erhöhung der Zuverlässigkeit erreicht werden.

Diese Aufgabe wird erfindungsgemäß dadurch gelöst, dass das Rückschlagventil in einem axialen Kanal innerhalb der Antriebswelle angeordnet ist.

Die Erfindung hat den Vorteil, dass bei Aktivierung des Drehmomentfühlers das von diesem gepumpte Druckmittel nur sehr kurze Wege zurücklegen muss, womit insbesondere mit solchen langen Wegen verbundene hohe Druckverluste vermieden werden.

Außerdem wird die Anzahl von Rohrleitungen und Verbindungselementen reduziert, was nicht nur zu einer Senkung der Kosten führt, sondern auch noch zu einer Erhöhung der Betriebssicherheit.

Bei einer besonders bevorzugten Ausführung wird das vorgesehene Rückschlagelement in dem Rückschlagventil durch eine in Axialrichtung federbelastet verschiebbare Hülse gebildet. Diese sitzt insbesondere auf einen Rohrstück, über das im Normalbetrieb zentrisch das über den Drehmomentfühler geleitete Druckmittel strömt.

Bei einer Weiterbildung der Vorrichtung ist auf der Abtriebswelle ein weiterer Drehmomentfühler angeordnet. Außerdem ist in der Antriebswelle ein zweites Rückschlagventil integriert. Dieses zweite Rückschlagventil öffnet, wenn der erste Drehmomentfühler am Ende seines Bewegungsbereiches seine Pumpaktion beendet, so dass ein weiterer Druckaufbau vom weiteren Drehmomentfühler an der Abtriebswelle resultiert. So wird dann durch den weiteren Drehmomentfühler über das zweite Rückschlagventil am ersten Rückschlagventil vorbei zusätzliches Druckmittel zum Spannmittel auf der Antriebsseite gepumpt.

Auf diese Art und Weise kann der Bereich, in dem ein Drehmomentstoß abgefangen werden kann, vergrößert werden.

Weitere Vorteile und Merkmale der Erfindung ergeben sich aus der nachfolgenden Beschreibung eines Ausführungsbeispiels. Dabei zeigt:
- Figur 1: die Prinzipskizze eines erfindungsgemäßen Kegelscheibengetriebes;
- Figur 2: Schemazeichnung einer Antriebswelle bei einem Getriebe gemäß der Figur 1.

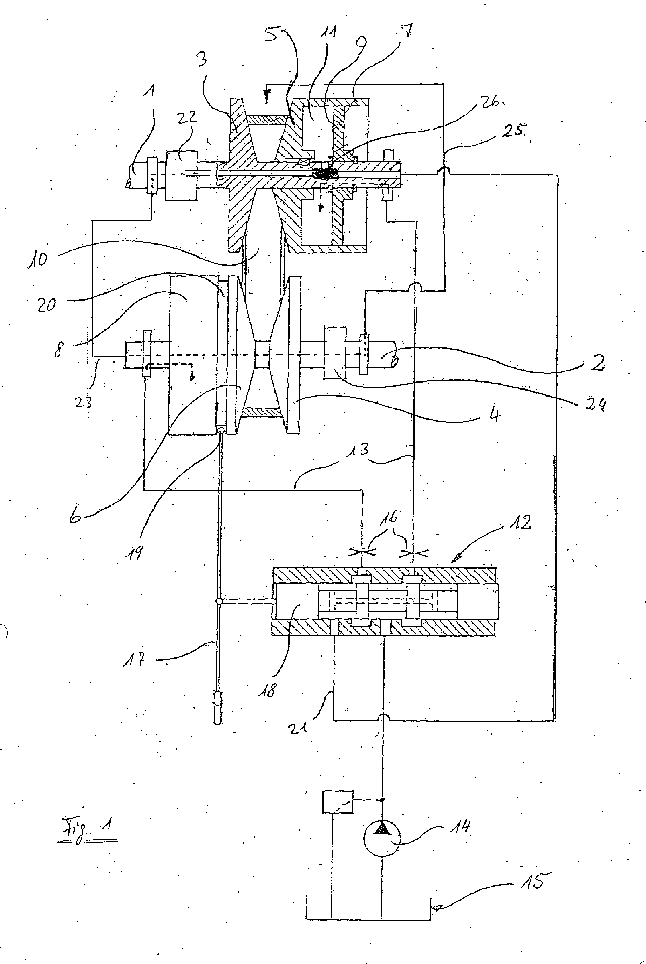

In der Figur 1 ist ein stufenlos einstellbares Kegelscheibengetriebe als Prinzipskizze dargestellt.

Das Kegelscheibengetriebe hat eine Antriebswelle 1 und eine Abtriebswelle 2. Mit diesen sind jeweils Kegelscheiben 3, 4 starr verbunden, während die diesen gegenüberliegenden Kegelscheiben 5, 6 auf den Wellen axial verschiebbar aber drehfest angeordnet sind. Die verschiebbaren Kegelscheiben 5, 6 weisen jeweils einen im wesentlichen zylinderförmigen Anbau 7, 8 auf, in dem sich jeweils ein mit der entsprechenden Welle starr verbundener Kolben 9 (nur auf der Antriebswelle 1 dargestellt) befindet. Zwischen dem Kegelscheibenpaar 3, 5 auf der Antriebswelle 1 und dem Kegelscheibenpaar 4, 6 auf der Abtriebswelle 2 läuft ein Zugmittel 10 um. Dieses Zugmittel darf gegenüber den Kegelscheiben nur für einige Millisekunden durchrutschen, da sonst irreparable Beschädigungen an den Reibpartnern entstehen. Das Durchrutschen bedeutet nämlich ein lokales Erhitzen in den Kontaktzonen der Reibpartner, das bei zu langer Einwirkung zu Gefügeänderungen führt bei den Reibpartnern, insbesondere bei den Kegelscheiben, die mit beachtlichem Härteverlust einhergehen und somit einen Verlust der Verschleißfestigkeit bedeuten mit der Folge von Rillenbildung.

Zur Anpressung des Zugmittels 10 an die Kegelscheibenpaare 3, 5 und 4, 6 sowie zur Änderung der Getriebeübersetzung wird den in den zylinderartigen Anbauten 7, 8 einseitig durch den Kolben 9 begrenzten Räumen 11 (nur auf der Antriebsseite dargestellt) von einem Vierkantensteuerventil 12 über Leitungen 13 Druckmittel zugeteilt, dass dieses von einer Druckmittelpumpe 14 aus einem Druckmittelvorrat 15 bezieht. In den Leitungen 13 befinden sich Blenden 16, die der Einstellung der Verstellgeschwindigkeit und der Dämpfung der Verstellbewegung dienen.

Ein Steuerhebel 17, der mit dem Schieber 18 verbunden ist, greift mit einem Gleitstein an seinem freien Ende 19 in eine Nut 20 am zylinderartigen Anbau 8 der Abtriebswelle ein, während er an seinem anderen freien Ende entweder von Hand (wie dargestellt) oder durch eine elektronische Regelung o. ä. (nicht dargestellt) betätigbar ist.

Will das Getriebe aus der voreingestellten Übersetzungsstellung ausweichen, so führt dies über den Steuerhebel 17 und dessen Eingriff in die Nut 20 zu einer Verschiebung des Steuerschiebers 18, die in einer bekannten Weise für die Rückstellung bzw. Aufrechterhaltung der voreingestellten Getriebeübersetzung sorgt.

Entsprechendes geschieht, wenn die Soll-Übersetzungseinstellung am Steuerhebel 17 geändert wird, bis die eingestellte Getriebeübersetzung erreicht ist und sich ein für die geänderte Übersetzung notwendiger neuer Gleichgewichtszustand eingeregelt hat.

In diesem Zustand ist der Steuerschieber 18 ständig wie dargestellt etwas aus der Mittellage ausgelenkt. Hierdurch wird der Druck, der in dem Raum in dem zylinderartigen Anbau 8 am Abtrieb herrscht etwas geringer gehalten als der Druck im Raum 11 am Antrieb. Dieser ist aus Gleichgewichtsgründen etwas höher.

Der Basisdruck des gesamten Systems wird im wesentlichen bestimmt durch den Druck in der Leitung 21, über die das aus dem Steuerventil 12 abfließende Druckmittel strömt. Der Druck in dieser Leitung 21 wird bestimmt durch einen Drehmomentfühler 22, der diesen in Abhängigkeit vom an der Antriebswelle übertragenen Drehmoment regelt. Hinter dem Drehmomentfühler 22 fließt das Druckmittel über eine Leitung 23 zu einem weiteren Drehmomentfühler 24, der auf der Abtriebswelle 2 angeordnet ist. Hinter diesem weiteren Drehmomentfühler 24 fließt das Druckmittel dann über eine Abflussleitung 25 frei ab und kann dabei beispielsweise noch zur Zugmittelschmierung dienen.

Der Drehmomentfühler 22 ist so ausgebildet, dass er bei einem kurzzeitigen extremen Druckmittelbedarf außer einer Absperrung der Druckmittelleitung 23 ein zusätzliches Pumpvolumen durch eine Fühlerzuflussleitung 40 zurück in die Richtung der Leitung 21 schiebt.

Dieses Pumpvolumen öffnet dabei gleichzeitig ein in der Figur 1 nur symbolisch dargestelltes Rückschlagventil 26 und strömt dabei unmittelbar in den Raum 11, wo es den Anpressdruck schlagartig erhöht. Die Feder in dem Rückschlagventil 26 ist dabei so eingestellt, dass dieses Ventil nur geöffnet wird, falls der Druck in der Leitung 21 höher ist als in den Leitungen 13, die vom Vierkantensteuerschieber 12 zu den Spannmitteln führen.

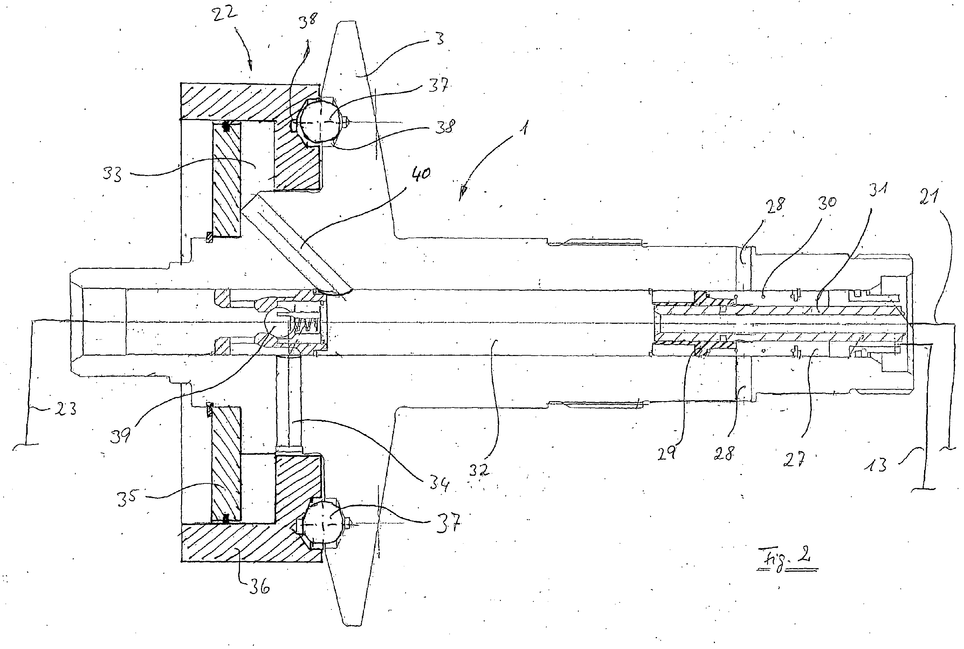

In der Figur 2 ist die eigentliche Antriebswelle 1 mit dem darauf angeordneten Drehmomentfühler 22 detaillierter dargestellt:

Die Getriebewelle 1 ist als Hohlwelle ausgebildet. Die starr mit der Antriebswelle 1 verbundene Kegelscheibe 3 ist dabei auch direkt integriert in den Drehmomentfühler 22.

Das dem (in der Figur 2 nicht dargestellten) Raum 11 zuzuführende Druckmittel von der Leitung 13 strömt über einen Ringraum 27 zu radialen Druckmittelbohrungen 28. Der Ringraum 27 ist an seinem in der hier dargestellten Ausführungsform linken Ende durch eine verschiebbare Hülse 29 verschlossen, die durch eine Schraubenfeder 30 in Axialrichtung gegen einen Anschlag gedrückt wird (der in der im hier dargestellten Beispiel einen Anschlag nach links darstellt).

Diese verschiebbare Hülse 29 ist auf einem Rohrstück 31 verschiebbar, das einen zentrischen Anschluss bildet für die Leitung 21. Das Rohrstück 31 leitet das von der Leitung 21 gelieferte Druckmittel getrennt vom Ringraum 27 in die Axialbohrung 32 der als Hohlwelle ausgebildeten Antriebswelle 1. Von dieser Axialbohrung 32 strömt das Druckmittel über die Fühlerzuflussleitung 40 in einen Kolbenraum 33 des Drehmomentfühlers 22 und von diesem über eine radiale Bohrung 34 weiter zur Leitung 23, mit der es dann zu dem Drehmomentfühler 24 an der Abtriebswelle 2 geleitet wird.

Der Kolbenraum 33 wird begrenzt durch eine in Axialrichtung festsitzende Kolbenscheibe 35 sowie eine in Axialrichtung bewegliche Zylinderwandung 36, die ebenfalls Bestandteile des Drehmomentfühlers 22 sind.

Das von der Getriebewelle 1 zu übertragende Drehmoment wird über die Zylinderwandung 36 auf mehrere über den Umfang verteilte Kugeln 37 übertragen, die dieses Drehmoment auf eine Fühlerplatte weiterleiten, die im hier dargestellten Beispiel durch die axial fest abgestützte Kegelscheibe 3 gebildet wird.

Die Kugeln 37 sitzen dabei in Wälztaschen 38, die an einem radial verlaufenden Abschnitt der Zylinderwandung 36 und an der feststehenden Kegelscheibe 3 vorgesehen sind und die in Umfangrichtung als geneigte Flächen ausgebildete, einander gegenüberliegenden Anpresskurven bilden. Hierdurch kann sich eine dem übertragenen Drehmoment proportionale Axialkraft aufbauen, die die Zylinderwandung 36 des Drehmomentfühlers 22 gegen das Druckmittel innerhalb des Kolbenraumes 33 drückt.

Gleichzeitig wird durch die axiale Verstellung der Zylinderwandung 36 die Öffnung für das Abströmen des Druckmittels durch die radiale Bohrung 34 geändert. Damit wird die Strömung des Druckmittels hier so stark gedrosselt, dass sich ein Gleichgewicht zwischen der hydraulischen Kraft aus dem Druckmittel im Kolbenraum 33 und der durch die Kugeln 37 erzeugte Axialkraft einstellt.

Damit kann der Druck innerhalb des Systems einem sich ändernden Drehmoment innerhalb nur weniger Millisekunden folgen.

Bei einem besonders stark ansteigenden Drehmoment wird die axiale Verschiebung der Zylinderwandung 36 dazu führen, dass die radiale Bohrung 34 verschlossen wird und das dann noch vorhandene Druckmittel im Kolbenraum 33 durch die Fühlerzuflussleitung 40 zurück in die Axialbohrung 32 strömt. Dies geht mit einem starken Druckanstieg innerhalb der Axialbohrung 32 einher, der dazu führt, dass die verschiebbare Hülse 29 gegen die Kraft der Schraubenfeder 30 im hier dargestellten Beispiel nach rechts verschoben wird und somit die zum Raum 11 führenden radialen Druckmittelbohrungen 28 mit der Axialbohrung 32 verbunden sind. Damit kann das aus dem Kolbenraum 33 strömende Druckmittel auf kürzestem Weg durch die radialen Druckmittelbohrungen 28 in den Raum 11 strömen und damit dort den benötigten höheren Druck erzeugen sowie gegebenenfalls zusätzlich gespeichertes Öl zum Ausgleich vom Ölkompressibilität und Systemelastizität hinein pumpen.

Als weitere Besonderheit weist die in der Figur 2 dargestellte Antriebswelle 1 im Bereich des Drehmomentfühlers 22 ein zweites Rückschlagventil 39 auf.

Dieses zweite Rückschlagventil 39 kommt zum Einsatz, wenn die Zylinderwandung 36 ihren konstruktionsbedingt maximalen Abstand von der Fühlerplatte bzw. der starren Kegelscheibe 3 aufweist und somit der Drehmomentfühler 22 seine beschriebene Pumpaktion beendet. Sinkt daraufhin der Druck innerhalb der Axialbohrung 32, während gleichzeitig der weitere Drehmomentfühler 24 in der Abtriebswelle in vergleichbarer Weise Öl mit hohem Druck durch die Leitung 23 zurückschiebt, so öffnet das Rückschlagventil 39 und es kann weiterhin Druckmittel mit einem hohen Druck durch die Axialbohrung 32 auf die verschiebbare Hülse 29 wirken, diese verschieben und dann an dieser vorbei durch die radialen Druckmittelbohrungen 28 weiter in dem Raum 11 strömen, um hier weiterhin den nötigen Druck aufrechtzuerhalten. Hierdurch können noch höhere Drehmomentsprünge ohne das beschriebene schädliche Kettenrutschen vom Getriebe abgefangen werden.

## Patentansprüche

1. Stufenlos einstellbares Kegelscheibengetriebe mit auf An- und Abtriebswelle (1, 2) drehfest angeordneten Paaren von Kegelscheiben (3, 5; 4, 6) von denen je eine (3, 4) fest mit der Welle verbunden sowie je eine (5, 6) axial verschiebbar ist und zwischen denen ein Zugmittelstrang (10) zur Leistungsübertragung umläuft, wobei die axial verschiebbaren Kegelscheiben (5, 6) mit hydraulischen axial wirkenden Spannmitteln (11) versehen sind, denen zur Einstellung und Aufrechterhaltung der Getriebeübersetzung von einer Pumpe (14) Druckmittel über ein Steuerventil (12) zugeteilt wird, wobei im Druckmittelfluss dem Spannmittel auf der Antriebswelle (1) ein Drehmomentfühler (22) nachgeschaltet ist, der im Momentenfluss angeordnet ist und durch eine drehmomentabhängige Relativbewegung zweier Ventilteile (34, 36) lastabhängig den Druckmittelfluss drosselt und zusätzlich ein bestimmtes Volumen des Druckmittels über wenigstens ein Rückschlagventil (26) in die hydraulischen Spannmittel (11) pumpt,
**dadurch gekennzeichnet,**
**dass** das Rückschlagventil (26) in einem axialen Kanal (32) der Antriebswelle (1) angeordnet ist.

2. Kegelscheibengetriebe gemäß Anspruch 1,
**dadurch gekennzeichnet,**
**dass** das Rückschlagelement im Rückschlagventil (26) eine in Axialrichtung federbelastet verschiebbare Hülse (29) ist.

3. Kegelscheibengetriebe gemäß Anspruch 1,
**dadurch gekennzeichnet,**
**dass** auf der Abtriebswelle (2) ein weiterer Drehmomentfühler (24) angeordnet ist und dass in der Antriebswelle (1) ein zweites Rückschlagventil (39) integriert ist, wobei der erste Drehmomentfühler (22) am Ende seines Bewegungsbereichs eine Strömungsöffnung (34) schließt und der weitere Drehmomentfühler (24) über das zweite Rückschlagventil (39) Druckmittel zum Spannmittel (11) auf der Antriebsseite pumpt.
